# EUROPEAN PATENT APPLICATION

(11) **EP 1 921 562 A2**
(43) Date of publication of application: **14.05.2008**
(21) Application number: 07019949.2
(22) Date of filing: 11.10.2007
(51) Int. Cl.: G06F 21/24

(54) **Printing device and information processing system using the same**

(30) Priority: 08.11.2006 JP 2006302849
(71) Applicant: Murata Machinery, Ltd., 3 Minami Ochiai-cho, Kisshoin Minami-ku, Kyoto-shi, Kyoto (JP)
(72) Inventor: Tomita, Hisanori, Kyoto 612-8686 (JP)
(74) Representative: Schoppe, Fritz

(57) **Abstract**

A printing device for performing a printing job in accordance with a print request issued from an external processing apparatus includes: a table storage unit that stores a print request management table in which a password, request source identification data for identifying the external processing apparatus which has transmitted the print request and a job code for specifying the print request are coordinated with each other; and a print control unit that requests entry of a password and, when the password is entered, searches the print request management table and, when there is only one password which matches the entered password, performs the printing job in accordance with the print request specified by the job code which is determined by the password and, when there are a plurality of the passwords which match the entered password, compares the request source identification data corresponding to the respective passwords and, when the request source identification data corresponding to the respective passwords are different from each other, requests entry of the request source identification data and, when the request source identification data is entered, performs the printing job in accordance with the print request specified by the job code determined by the entered password and the request source identification data.

## Description

### CROSS-REFERENCE TO RELATED APPLICATIONS

This application claims priority to Japanese Patent Application No. 2006-302849, filed on November 08, 2006, which application is hereby incorporated by reference in its entirety.

### BACKGROUND OF THE INVENTION

### 1. Field of the Invention

The present invention relates to a printing device connected to a plurality of pieces of external processing apparatus such as personal computers (PCs) via a network such as Local Area Network (LAN) for performing a printing job according to a print request from the external processing apparatus, and an information processing system using the same.

### 2. Description of the Related Art

When one printing device is commonly used by a plurality of personal computers, the printing device is adapted to start a printing job on a recording paper immediately upon reception of a print request from the PC according to the print request. In many cases, the printing device is installed at a position apart from the PC, and hence the printing job on the recording paper is started before a user who has operated the PC and issued the print request moves to the position where the printing device is installed. Therefore, the printed recording paper may come to someone' s notice. Therefore, there is a disadvantage such that when the information to be printed is confidential, its confidentiality is not observed.

Therefore, there is proposed a printing device which is adapted to request a user to enter a personal identification number and start a printing job when the personal identification number is accepted. In the case of the printing device as described above, when the printing device receives a print data from a workstation via a network in a personal identification number protection mode, the printing device returns a reception number of a printed output data to the workstation and inquires the personal identification number. When the user enters the personal identification number from the workstation, the personal identification number is transmitted to the printing device. The printing device stores the reception number, the personal identification number and the printed output data in coordination with each other. In order to print out, the user enters the reception number and the personal identification number through a keyboard on the printing device. When the entered reception number and personal identification number match the reception number and the identification number stored in advance, the printed output data stored in coordination with these numbers is printed out.

In the related art, the user needs to enter the reception number and the personal identification number for printing and hence an input operation is complicated.

In order to facilitate the input operation, the printing device may be configured to start a printing job only with one password. However, in the case of using only one password, as a plurality of users use a single printing device in common, it is necessary to use a password which is not overlapped with those of other persons, is desired to set a relatively long password at every print request in order to enhance the security. However, in such a case, a possibility to enter a wrong password or to forget the password increases.

### SUMMARY OF THE INVENTION

Accordingly, it is an object of the present invention to provide a printing device in which a password input operation for starting a printing job is facilitated and improvement of security is achieved, and an information processing system using the same.

In order to solve the above-described problems, according to the invention, there is provided a printing device for performing a printing job in accordance with a print request issued from an external processing apparatus including: table storage means that stores a print request management table in which a password, request source identification data for identifying the external processing apparatus which has transmitted the print request and a job code for specifying the print request are coordinated with each other; and print control means that requests entry of a password and, when the password is entered, searches the print request management table and, when there is only one password which matches the entered password, performs the printing job in accordance with the print request specified by the job code which is determined by the corresponding password and, when there are a plurality of the passwords which match the entered password, compares the request source identification data corresponding to the respective passwords and, when the request source identification data corresponding to the respective passwords are different from each other, requests entry of the request source identification data and, when the request source identification data is entered, performs the printing job in accordance with the print request specified by the job code determined by the entered password and the request source identification data.

According to the invention, the printing device further includes print request management means that, upon reception of the print request from the external processing apparatus, acquires the password and the request source identification data from the corresponding print request, writes the acquired password and the request source identification data and the job code which specifies the corresponding print request in the print request management table and, when the printing job in accordance with the print request is completed, erases the information relating to the corresponding print request from the print request management table.

According to the printing device in the invention, when there are a plurality of matched passwords having the same request source identification data, the print control means performs the printing job according to the plurality of print requests specified by the job codes which are determined respectively by the plurality of same passwords.

According to the printing device in the invention, whether or not to perform all the printing jobs in accordance with the plurality of print requests specified by the job codes determined respectively by the plurality of the same passwords may be selected in advance.

According to the printing device in the invention, whether or not to perform all the printing jobs in accordance with the plurality of print requests specified by the job codes determined respectively by the plurality of the same passwords may be selected at the time of entering the password.

The invention also provides an information processing system configured by connecting a plurality of pieces of external processing apparatus and a printing device for performing a printing job in accordance with a print request from the external processing apparatus, wherein the external processing apparatus includes a print request creating unit that creates a print request and requests entry of a password when the printing job in the printing device is instructed and, when the password is entered, adds the entered password and the request source identification data for identifying the external processing apparatus to the print request and transmits the same to the printing device, and the printing device includes: a table storage unit that stores a print request management table in which the password, the request source identification data and a job code for specifying the print request are coordinated with each other; a print request management unit that, upon reception of the print request from the external processing apparatus, acquires the password and the request source identification data from the corresponding print request, writes the acquired password and the request source identification data and the job code which specifies the corresponding print request in the print request management table and, when the printing job in accordance with the print request is completed, erases the information relating to the corresponding print request from the print request management table; and a print control unit that requests entry of the password and, when the password is entered, searches the print request management table and, when there is only one password which matches the entered password, performs the printing job in accordance with the print request specified by the job code which is determined by the corresponding password and, when there are a plurality of the passwords which match the entered password, compares the request source identification data corresponding to the respective passwords and, when the request source identification data corresponding to the respective passwords are different from each other, requests entry of the request source identification data and, when the request source identification data is entered, performs the printing job in accordance with the print request specified by the job code which is determined by the entered password and the request source identification data.

According to the invention, when the printing job is performed, the user is requested to enter a password. When there is one printing job which matches the password entered by the user in the print request management table, the printing job is performed in accordance with the print request specified by the job code which is determined by the password. On the other hand, when there are a plurality of printing jobs which match the password entered by the user in the print request management table, the request source identification data corresponding to the passwords are compared and, when the request source identification data corresponding to the respective password are different from each other, the user is requested to enter the request source identification data. When the user enters the request source identification data, the printing job is performed in accordance with the print request specified by the job code which is determined by the entered password and the request source identification data.

Since the user can perform the printing job basically by simply entering the password, the input operation is simplified. Since the user enters the request source identification data when there are a plurality of the same passwords stored in the print request management table and the request source identification data corresponding to these passwords are different from each other, printing of the print request of other persons by mistake is prevented, and enhancement of the security is achieved. Since the problem of security does not occur easily even when a relatively short password is set, even when different passwords are set for each print request, the possibility to enter a wrong password or to forget the password is avoided, and smooth printing operation is achieved.

According to the present invention, upon reception of a print request from the external processing apparatus, information is written in the print request management table and, when the printing job in accordance with the print request is completed, the information relating to the print request is erased from the print request management table. Therefore, the possibilities such that the same printing jobs are repeatedly performed or the password is leaked to other people are avoided.

According to the invention, when there are a plurality of the same passwords which match the password entered by the user in the print request management table, and the request source identification data corresponding to the passwords are the same, the printing job in accordance with the print requests specified respectively by the plurality of the job codes which are determined by the password is performed. Therefore, when one user wants to perform a plurality of printing jobs, the printing jobs in accordance with the plurality of print requests are performed only by setting the same password to the plurality of the print requests and entering the password once, so that the convenience is improved.

According to the invention, since the user can select whether or not to perform all the printing jobs in accordance with the print requests specified by the job codes which are determined respectively by the plurality of the same passwords in advance, the printing job may be-performed in a mode according to the preference of the user.

According to the invention, the user can select whether or not to perform all the printing jobs in accordance with the print request specified by the job codes which are determined respectively by the plurality of the same passwords when entering the password to the printing device. Therefore, the user can select the desired mode for every printing job, so that the convenience is improved.

According to the invention, when the printing job is performed, the user is requested to enter the password. When there is one printing job which matches the password entered by the user in the print request management table, the printing job is performed in accordance with the print request specified by the job code which is determined by the password. On the other hand, when there are a plurality of printing jobs which match the password entered by the user in the print request management table, the request source identification data corresponding to the passwords are compared and, when the request source identification data corresponding to the respective passwords are different from each other, the user is requested to enter the request source identification data. When the user enters the request source identification data, the printing job is performed in accordance with the print request specified by the job code which is determined by the entered password and the request source identification data.

Since the user can perform the printing job basically by simply entering the password, the input operation is simplified. Since the user enters the request source identification data when there are a plurality of the same passwords stored in the print request management table and the request source identification data corresponding to these passwords are different from each other, printing of the print request of other persons by mistake is prevented, and enhancement of the security is achieved. Since the problem of security does not occur easily even when a relatively short password is set, even when the different passwords are set for each print request, the possibility to enter a wrong password or to forget the password is avoided, and the smooth printing operation is achieved.

When the user operates the external processing apparatus to give an instruction of a printing job in the printing device, the user is requested to enter the password and, when the password is entered, the entered password and the request source identification data are transmitted to the printing device together with the print request. In this manner, the user must simply set the password, and does not have to set the request source identification data, so that the setup operation is simplified.

In addition, upon reception of the print request from the external processing apparatus, information is written in the print request management table and, when the printing job in accordance with the print request is completed, the information relating to the print request is erased from the print request management table. Therefore, the possibilities such that the same printing jobs are repeatedly performed or the password is leaked to other people are avoided.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a block diagram illustrating a configuration of a facsimile multifunction peripheral as a printing device according to an embodiment of the invention.

Fig. 2 is a drawing illustrating a print request management table stored in a storage unit of the facsimile multifunction peripheral.

Fig. 3 is a flowchart illustrating a processing operation of a print control unit.

### DETAILED DESCRIPTION OF PREFERRED EMBODIMENTS

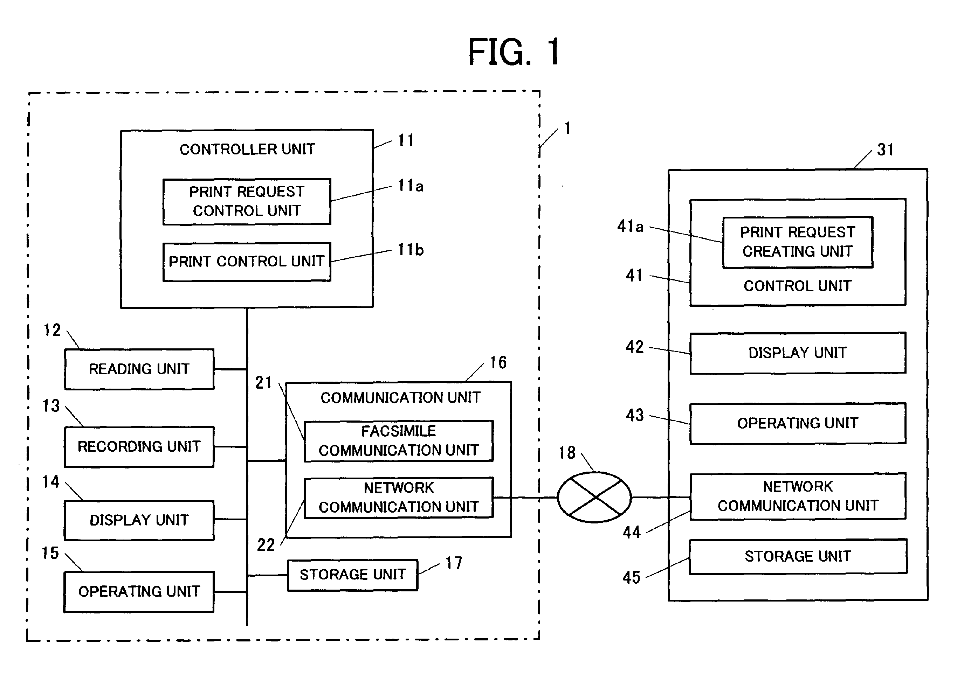

Fig. 1 is a block diagram illustrating a facsimile multifunction peripheral 1 as a printing device according to an embodiment of the invention. The facsimile multifunction peripheral 1 is connected to a plurality of pieces of external processing apparatus 31 such as personal computers via a network (for example, LAN) 18 to configure an information processing system.

The facsimile multifunction peripheral 1 includes a controller unit 11, a reading unit 12, a recording unit 13, a display unit 14, an operating unit 15, a communication unit 16, and a storage unit 17 as table storing means as illustrated in Fig. 1. Functions of the facsimile multifunction peripheral 1 include a facsimile function, an internet facsimile function, a copying function, a scanner function, and a printer function.

The controller unit 11 supervises control of the facsimile multifunction peripheral 1, and includes a CPU. The controller unit 11 includes a print request control unit 11a as print request control means and a print control unit 11b as print control means as functional components. Roles of the print request control unit 11a and the print control unit 11b will be described later in detail.

The reading unit 12 has a function to read an original document, and is used for reading an original document when sending the original document at the time of facsimile transmission, or for reading the original document when the scanner function is used. The recording unit 13 includes the printer device, and prints image data on paper or the like under the control of the print control unit 11b.

The display unit 14 includes a liquid crystal display device, and is used for displaying operational information and the like of the facsimile multifunction peripheral 1. The operating unit 15 includes a plurality of operating buttons and a touch panel, and is used for operating the facsimile multifunction peripheral 1.

The communication unit 16 serves as a communication interface of the facsimile multifunction peripheral 1. The communication unit 16 includes a facsimile communication unit 21 and a network communication unit 22.

The facsimile communication unit 21 takes a charge of facsimile transmission and receiving via a telephone line network. More specifically, the facsimile communication unit 21 includes a Network Control Unit (NCU) and a modem.

The network communication unit 22 takes a charge of data communication via the network 18 as a communication network such as Local Area Network (LAN) and internet. More specifically, the network communication unit 22 includes a function to handle Simple Mail Transfer Protocol (SMTP), Post Office Protocol (POP), Server Message Block (SMB), and Hyper Text Transfer Protocol (HTTP). A specific function of the network communication unit 22 includes transmission and receiving of an electronic mail, transmission and receiving of an internet facsimile for transmission and receiving the electronic mail with an attachment of image data, and data transmission and receiving via the LAN or the internet.

The storage unit 17 includes a bulk storage such as a hard disk device. Contents to be stored in the storage unit 17 include a print request management table, described later, facsimile image data transmitted and received via the facsimile multifunction peripheral 1, transmitted and received internet facsimile image data, transmitted and received electronic mail data, image data read when using the scanner function, and data relating to setup or maintenance management of the facsimile multifunction peripheral 1.

The each external processing apparatus 31 includes a control unit 41, a display unit 42, an operating unit 43, a network communication unit 44, and a storage unit 45.

The control unit 41 supervises control of the external processing apparatus 31, and includes a CPU. The control unit 41 includes a print request creating unit 41a as a functional component. The display unit 42 includes a liquid crystal display device, and is used for displaying operational information, and results of processing of the external processing apparatus 31. The operating unit 43 includes a plurality of operating buttons, and is used for operating the external processing apparatus 31.

The network communication unit 44 has a function substantially the same as the network communication unit 22 of the facsimile multifunction peripheral 1, so that various data communications are performed between the external processing apparatus 31 and the facsimile multifunction peripheral 1.

The storage unit 45 includes a bulk storage such as a hard disk device. Contents to be stored in the storage unit 45 include a processing program executed by the external processing apparatus 31 such as a printer driver and a scanner driver, a result of processing by the processing program, and data relating to set up and maintenance management of the external processing apparatus 31. The print request creating unit 41a described above is implemented by the printer driver.

This embodiment is focused on facilitating an entry operation of a password for starting a printing job and improving security.

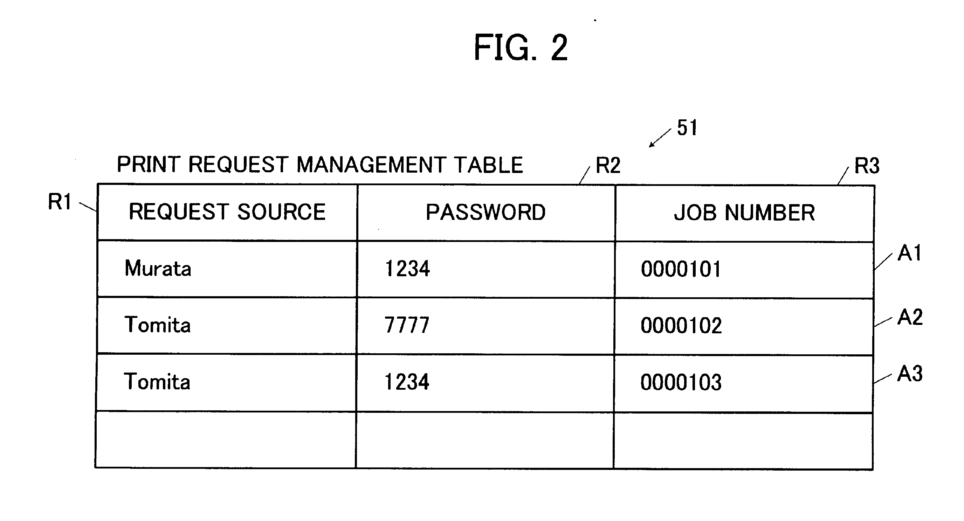

Fig. 2 illustrates a print request management table 51 stored in the storage unit 17 of the facsimile multifunction peripheral 1. The print request management table 51 includes a request source column R1, a password column R2 and a JOB number column R3.

The request source column R1 stores request source identification data for identifying the external processing apparatus which has transmitted a print request. The password column R2 stores a password set by a user who has operated the external processing apparatus from which the print request has transmitted. The JOB number column R3 stores a JOB number as a job code for specifying the received print request. When the print request from the external processing apparatus 31 is received by the facsimile multifunction peripheral 1, data is written in the respective columns R1, R2 and R3 of the print request management table 51.

In the print request management table 51 illustrated in Fig. 2, request source identification data "Murata", a password "1234" and a JOB Number "0000101" are stored in a row A1. Request source identification data "Tomita", a password "7777", and a JOB Number "0000102" are stored in a row A2. The Request source identification data "Tomita", the password "1234" and a JOB number "0000103" are stored in a row A3.

The print request is created by the print request creating unit 41a of the control unit 41 provided in the external processing apparatus 31 and transmitted. When a user of the external processing apparatus 31 gives an instruction to the facsimile multifunction peripheral 1 to perform a printing job, the print request creating unit 41a requests the user to enter a print range specification and a print format such as the paper size and paper feed and discharge mode and, when the user enters the print format, creates a print request including the print data and the print format. Subsequently, the print request creating unit 41a requests entry of a password and, when the user enters the password, adds the entered password, and the request source identification data for identifying the corresponding external processing apparatus 31 to the print request and transmits the same to the facsimile multifunction peripheral 1. Transmission of the print request is performed via the network communication unit 44.

The request source identification data needs to be information added for identifying the external processing apparatus 31 and be information which is not overlapped with those in other external processing apparatus. Therefore, for example, IP address, a host name and MAC address are used. When a plurality of types of identification data are added to the external processing apparatus 31, the identification data of a type predetermined by the print request creating unit 41a is used as the request source identification data. A configuration in which the type of the identification data used as the request source identification data is selected by the user at the time of default setting is also applicable.

In the facsimile multifunction peripheral 1 which has received the print request, the print request control unit 11a of the controller unit 11 writes data into the print request management table 51. Upon reception of the print request from the external processing apparatus 31, the print request control unit 11a stores the received print request in the storage unit 17 and acquires the password and the request source identification data from the received print request. Then, the print request control unit 11a writes the request source identification data into the request source column R1, writes the password in the password column R2, and writes the JOB number which specified the received print request in the JOB number column R3. Upon completion of the printing job in accordance with the print request, the print request control unit 11a erases the data corresponding to the completed print request from the print request management table 51.

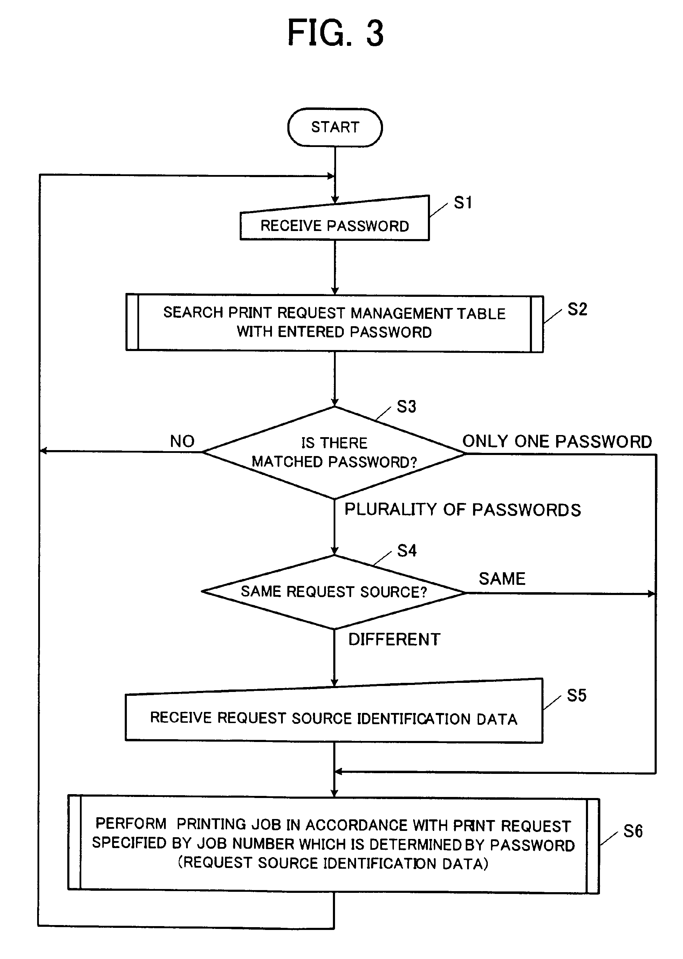

The print control unit 11b controls the printing job using the print request management table 51. Fig. 3 is a flowchart of a processing operation of the print control unit 11b. This processing operation is started when the user operates the operating unit 15 of the facsimile multifunction peripheral 1 and selects the printer function.

In Step S1, the user is requested to enter a password and the password entered through the operating unit 15 is accepted. Request of entry of the password is done, for example, by displaying a message on the display unit 14. In Step S2, the print request management table 51 is searched with the entered password.

In Step S3, whether or not there is a matched password is determined. When there is no matched password, for example, a message saying that there is no matched password is displayed on the display unit 14, and the procedure goes back to Step S1.

In Step S3, when there is only one matched password, the procedure goes to Step S6. In Step S6, the printing job in accordance with the print request specified by the JOB number which is determined by the password is started. When the printing job is completed, information relating to the completed print request is erased from the print request management table 51, and the procedure goes back to Step S1.

For example, in the case of the print request management table 51 illustrated in Fig. 2, when the password "7777" is entered, there is only one matched password, and hence the printing job in accordance with the print request specified by the JOB number "0000102" is performed.

In Step S3, when there are a plurality of matched passwords, the procedure goes to Step S4. In Step S4, whether or not the request source identification data corresponding to the respective passwords are the same is determined. When the request source identification data corresponding to the respective passwords are the same, the procedure goes to Step S6. In Step S6, a printing job in accordance with the print requests specified respectively by the plurality of the JOB numbers which are determined by the plurality of the same passwords and the request source identification data is started. Upon completion of the printing job, the information relating to the plurality of completed print requests is erased from the print request management table 51, and the procedure goes back to Step S1.

In Step S4, when the request source identification data corresponding to the respective passwords are different from each other, the procedure goes to Step S5. In Step S5, the user is requested to enter the request source identification data, the request source identification data entered through the operating unit 15 is accepted, and the procedure goes to Step S6. The request of entry of the request source identification data is done, for example, by displaying a message on the display unit 14.

In Step S6, the printing job in accordance with the print request specified by the JOB number (one or more) which is determined by the password and the request source identification data is started. Upon completion of the printing job, the information relating to the completed print request is erased from the print request management table 51, and the procedure goes back to Step S1.

For example, in the case of the print request management table 51 illustrated in Fig. 2, when the password "1234" is entered, there are two matched passwords, and hence the request source identification data corresponding to the respective passwords are compared. Since the request source identification data are respectively "Murata" and "Tomita", which are different from each other, and hence the user is requested to enter the request source identification data. When "Murata" is entered as the request source identification data, the printing job specified by the print request which is determined by the JOB number "0000101", and "Tomita" is entered as the request source identification data, the printing job in accordance with the print request specified by the JOB number "0000103" are performed.

In the embodiment described above, in the case in which there are a plurality of the same passwords and the request source identification data are also the same, all the printing jobs in accordance with the plurality of print requests are performed. However, it is also possible to cause the user to select the print request to be executed, and prints only in accordance with the selected print request.

It is also possible to allow the user to select whether or not to perform all the printing jobs in accordance with the plurality of the print requests specified by the same passwords and the same request source identification data. This selection may be performed as a default setting of the facsimile multifunction peripheral 1 and may be performed when entering the password in the facsimile multifunction peripheral 1.

While the present invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the present invention that fall within the true spirit and scope of the present invention.

## Claims

1. A printing device (1) for performing a printing job in accordance with a print request issued from an external processing apparatus (31) comprising:
a table storage unit (17) that stores a print request management table in which a password, request source identification data for identifying the external processing apparatus (31) which has transmitted the print request and a job code for specifying the print request are coordinated with each other; and
a print control unit (11b) that requests entry of a password and, when the password is entered, searches the print request management table and, when there is only one password which matches the entered password, performs the printing job in accordance with the print request specified by the job code which is determined by the corresponding password and, when there are a plurality of the passwords which match the entered password, compares the request source identification data corresponding to the respective passwords and, when the request source identification data corresponding to the respective passwords are different from each other, requests entry of the request source identification data and, when the request source identification data is entered, performs the printing job in accordance with the print request specified by the job code determined by the entered password and the request source identification data.

2. The printing device (1) according to Claim 1, further comprising: a print request management unit (11a) that, upon reception of the print request from the external processing apparatus (31), acquires the password and the request source identification data from the corresponding print request, writes the acquired password and the request source identification data and the job code which specifies the corresponding print request in the print request management table and, when the printing job in accordance with the print request is completed, erases the information relating to the corresponding print request from the print request management table.

3. The printing device (1) according to Claim 1, wherein when there are a plurality of matched passwords having the same request source identification data, the print control unit (11b) performs the printing job according to the plurality of print requests specified by the job codes which are determined respectively by the plurality of same passwords.

4. The printing device (1) according to Claim 3, wherein whether or not to perform all the printing jobs in accordance with the plurality of print requests specified by the job codes determined respectively by the plurality of the same passwords is selected in advance.

5. The printing device (1) according to Claim 3, wherein whether or not to perform all the printing jobs in accordance with the plurality of print requests specified by the job codes determined respectively by the plurality of the same passwords is selected at the time of entering the password.

6. An information processing system configured by connecting a plurality of pieces of external processing apparatus (31) and a printing device (1) for performing a printing job in accordance with a print request from the external processing apparatus (31), wherein the external processing apparatus (31) includes a print request creating unit that creates a print request and requests entry of a password when the printing job in the printing device (1) is instructed and, when the password is entered, adds the entered password and request source identification data for identifying the external processing apparatus (31) to the print request and transmits the same to the printing device (1), the printing device (1) includes: a table storage unit that stores a print request management table in which the password, the request source identification data and a job code for specifying the print request are coordinated with each other;
a print request management unit (11a) that, upon reception of the print request from the external processing apparatus (31), acquires the password and the request source identification data from the corresponding print request, writes the acquired password and the request source identification data and the job code which specifies the corresponding print request in the print request management table and, when the printing job in accordance with the print request is completed, erases the information relating to the corresponding print request from the print request management table; and
a print control unit (11b) that requests entry of the password and, when the password is entered, searches the print request management table and, when there is only one password which matches the entered password, performs the printing job in accordance with the print request specified by the job code which is determined by the corresponding password and, when there are a plurality of the passwords which match the entered password, compares the request source identification data corresponding to the respective passwords and, when the request source identification data corresponding to the respective passwords are different from each other, requests entry of the request source identification data and, when the request source identification data is entered, performs the printing job in accordance with the print request specified by the job code which is determined by the entered password and the request source identification data.

7. A method of controlling a printing device (1) for performing a printing job according to a print request from an eternal processing apparatus (31) comprising the steps of:
storing a print request management table in which a password, request source identification data for identifying the external processing apparatus (31) which has transmitted the print request and a job code for specifying the print request are coordinated with each other; and
requesting entry of the password and, when the password is entered (S1), searching (S2) the print request management table and, when there is only one password which matches the entered password, performing the printing job (S3) in accordance with the print request specified by the job code which is determined by the corresponding password and, when there are a plurality of the passwords which match the entered password, comparing (S4) the request source identification data corresponding to the respective passwords and, when the request source identification data corresponding to the respective passwords are different from each other, requesting entry of the request source identification data and, when the request source identification data is entered (S5), performing (S6) the printing job in accordance with the print request specified by the job code determined by the entered password and the request source identification data.

8. The method of controlling the printing device (1) according to Claim 7, comprising the steps of:
receiving the print request from the external processing apparatus (31);
acquiring the password and the request source identification data from the corresponding print request;
writing the acquired password and the request source identification data and the job code which specifies the corresponding print request in the print request management table ; and
erasing the information relating to the corresponding print request from the print request management table upon completion of the printing job in accordance with the print request.

9. The method of controlling the printing device (1) according to Claim 7, comprising the step of:
performing the printing job according to the plurality of print requests specified by the job codes which are determined respectively by the plurality of same passwords when there are a plurality of matched passwords having the same request source identification data (S4).

10. The method of controlling the printing device (1) according to Claim 9, comprising the step of:
selecting whether or not to perform all the printing jobs in accordance with the plurality of print requests specified by the job codes determined respectively by the plurality of the same passwords in advance.

11. The method of controlling the printing device (1) according to Claim 9, comprising the step of:
selecting whether or not to perform all the printing jobs in accordance with the plurality of print requests specified by the job codes determined respectively by the plurality of the same passwords at the time of entering the password.

12. A method of controlling an information processing system configured by connecting a plurality of pieces of external processing apparatus (31) and a printing device (1) for performing a printing job in accordance with a print request from the external processing apparatus (31), comprising the steps of:
creating a print request and requesting entry of a password when the printing job in the printing device (1) is instructed;
adding the entered password and request source identification data for identifying the external processing apparatus (31) to the print request and transmitting the same to the printing device (1) when the password is entered (S1);
storing a print request management table in which a password, request source identification data and a job code for specifying the print request are coordinated with each other;
receiving the print request from the external processing apparatus (31);
acquiring the password and the request source identification data from the corresponding print request;
writing the acquired password and the request source identification data and the job code which specifies the corresponding print request in the print request management table;
erasing the information relating to the corresponding print request from the print request management table when the printing job in accordance with the print request is completed;
requesting entry of the password;
searching the print request management table when the password is entered;
performing the printing job in accordance with the print request specified by the job code which is determined by the corresponding password when there is only one password which matches the entered password;
comparing the request source identification data when there are a plurality of the passwords which match the entered password and requesting entry of the request source identification data when the request source identification data corresponding to the respective passwords are different from each other; and
performing the printing job in accordance with the print request specified by the job code which is determined by the entered password and the request source identification data when the request source identification data is entered.
